(19) Europäisches Patentamt
European Patent Office
Office européen des brevets

(11) Veröffentlichungsnummer: **0 020 358 B1**

(12) **EUROPÄISCHE PATENTSCHRIFT**

(45) Veröffentlichungstag der Patentschrift: **25.07.84**

(51) Int. Cl.³: **C 01 B 3/38, B 01 J 8/06**

(21) Anmeldenummer: **79900925.3**

(22) Anmeldetag: **20.08.79**

(86) Internationale Anmeldenummer:
**PCT/CH79/00112**

(87) Internationale Veröffentlichungsnummer:
**WO 80/01065 29.05.80 Gazette 80/12**

# (54) VERFAHREN UND VORRICHTUNG ZUR HERSTELLUNG VON WASSERSTOFF.

(30) Priorität: **21.11.78 CH 11935/78**

(43) Veröffentlichungstag der Anmeldung:
**07.01.81 Patentblatt 81/1**

(45) Bekanntmachung des Hinweises auf die Patenterteilung:
**25.07.84 Patentblatt 84/30**

(84) Benannte Vertragsstaaten:
**AT DE FR GB NL SE**

(56) Entgegenhaltungen:
**BE - A - 350 555**
**DE - A - 2 809 126**
**FR - A - 2 418 670**
**GB - A - 866 085**
**JP - A - 54 123 581**
**US - A - 2 235 401**

**Die Akte enthält technische Angaben, die nach dem Eingang der Anmeldung eingereicht wurden und die nicht in dieser Patentschrift enthalten sind.**

(73) Patentinhaber: **SILBERRING, Ludwig**
**Wipkingerplatz 7**
**CH-8037 Zürich (CH)**

(72) Erfinder: **SILBERRING, Ludwig**
**Wipkingerplatz 7**
**CH-8037 Zürich (CH)**

(74) Vertreter: **Maspoli, Renato A., Dipl.-Ing.**
**R.A. Maspoli, R. Siebert Patentanwälte**
**Promenadengasse 18**
**CH-8001 Zürich (CH)**

**EP 0 020 358 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die hier beschriebene Erfindung bezieht sich auf ein Verfahren und eine Vorrichtung zur Herstellung von Wasserstoff unter Druck mittels chemischer Reaktion zwischen Kohlenwasserstoffen und Wasserdampf und unter verringertem Kohlenwasserstoff- und Energiebedarf.

Wasserstoff wird in grossen Mengen hauptsächlich zur Synthese von Ammoniak bzw. Methanol benötigt.

Bekannt sind entsprechende Vorrichtungen, bei welchen Kohlenwasserstoffe und Wasserdampf bei hoher Temperatur in endothermen Reaktionen umgesetzt werden. Die benötigte Wärme wird durch interne oder externe Verbrennung einer zusätzlichen Menge von Kohlenwasserstoffen erzeugt. Insgesamt werden bei diesen Verfahren etwa 30 bis 40 MJ zur Herstellung von einem kg Ammoniak benötigt.

Aehnliche Vorrichtungen und Verfahren, bei denen die zusätzliche Enthalpie in Form von elektrischer Energie zugeführt wird, sind auch bekannt:

Beispielsweise lehrt die GB—Patentschrift 866085 ein Verfahren zur Zersetzung von Kohlenwasserstoffen zu Wasserstoff und Kohlenmonoxid unter Zugabe von Wasserdampf. Im Verfahren gemäss der genannten GB—Patentschrift wird in einem Dampfkessel 5 unter Benützung der Reaktionsgas-Abwärme Wasserdampf von nur etwa 383 K produziert. Dieser Dampf wird dann durch Zuführen von äusserer Wärmeenergie auf etwa 673 K gebracht, worauf er mit Kohlenwasserstoffen etwa gleicher Temperatur gemischt wird.

Diese Mischung wird nun im Reaktor 4 mittels Induktionsheizung auf die Reaktionstemperatur von etwa 1223 K gebracht. Die heissen Reaktionsprodukte verdampfen dann im Dampfkessel das für die Umsetzung benötigte Wasser.

Das eben beschriebene Verfahren setzt also die von aussen zugeführte Energie bei relativ tiefen Temperaturen ein:

beim Aufwärmen des Wasserdampfed von etwa 383 K auf etwa 673 K und bei der Erhitzung des gesamten Ausgangs-Gasgemisches von etwa 673 K an.

Die Vorrichtung zur Ausführung des Verfahrens gemäss der GB—Patentschrift 866 085 Schliesslich besteht aus mindestens drei Hauptaggregaten, die verfahrensmässig wie auch konstruktiv voneinander getrennt sind:

— die Reaktionskammer 4, in der die Reaktion ohne Wärmeaustausch erfolgt, wobei die zur Umsetzung benötigte Enthalpie, wie oben angedeutet, ausschliesslich mittels elektrisch induktiver Heizung zugeführt wird,
— der Dampfkessel 5, in dem die Reaktionsphase ihre Wärme an Wasser abgeben, welches dabei verdampft und auf eine Temperatur von etwa 383 K erhitzt wird und
— der Ueberhitzer 6, in dem der Wasserdampf aus 5 durch Zuführung von äusserer Energie auf die nötige Umsetzungstemperatur gebracht wird.

Diese Vorrichtung aus einzelnen Aggregaten weist—verglichen mit einer einheitlichen Anlage zur Ausführung aller Verfahrensschritte ausser der Verdampfung—naturgemäss eine komplexere und somit unwirtschaftlichere Konstruktion und entsprechend mehr Möglichkeiten von undichtheiten und Korrosionsbefall auf.

Bekannt sind ebenfalls Vorrichtungen der Elektrolyse von Wasser und der Thermolyse von Wasserdampf. Die dabei zur Dissoziation benötigten Energien können teilweise oder ganz durch nukleare Wärme bzw. durch elektrische Energie zugeführt werden. Bei keiner dieser Vorrichtung wird jedoch die insgesamt benötigte Energie wesentlich kleiner als vorhin genannt. Darüberhinaus ist die nukleare Wärme auf dem gewünschten Temperaturniveau noch nicht wirtschaftlich verfügbar und die elektrische Energie meistens wesentlich wertvoller als der Heizwert der Kohlenwasserstoffe.

Der genannte hohe Energiebedarf ist hauptsächlich nicht physikalisch, sondern durch die bei den bekannten Vorrichtungen innerhalb einer wirtschaftlichen Optimierung nicht wesentlich reduzierbaren Unumkehrbarkeiten bedingt.

Der vorliegenden Erfindung liegt die Aufgabe zugrunde, den Bedarf an Kohlenwasserstoffen zur Wasserstofferzeugung wesentlich (etwa auf die Hälfte) zu reduzieren, wobei ein Teil der eingesparten genannten Grundstoffe durch elektrische Energie zu ersetzen ist. Der elektrische Energiebedarf wird jedoch in der erfindungsgemässen Vorrichtung mehrmals kleiner sein als für die bekannte Elektrolyse und insgesamt wird immer noch wesentlich weniger Energie benötigt, als für irgendein bekanntes Verfahren. Darüberhinaus wird der apparative Aufwand für die erfindungsgemässe Anlage gegenüber den bekannten Anlagen reduziert.

Die erfindungsgemässe Vorrichtung zur Herstellung von Wasserstoff unter Druck, mittels chemischen Reaktionen zwischen Kohlenwasserstoffen und Wasserdampf und unter verringertem Kohlenwasserstoff- und Energiebedarf, ist dadurch gekennzeichnet, dass Wärmerekuperator, Katalysatorbehälter und elektrische Heizeinrichtungen in einem gemeinsamen Druckgehäuse untergebracht sind, das innen teilweise isoliert ist und aussen auf geeignete Weise gekühlt wird. Dadurch gelingt es, einen Teil der Wärme, die für das Aufwärmen der Ausgangsstoffe von Umgebungstemperatur auf obere Reaktionstemperatur sowie für die endothermen Reaktionen benötigt

wird, aus der Rekuperation der fühlbaren Wärme der Reaktionsprodukte zu gewinnen, wobei eine Rückvermischung der Ausgangsstoffe mit den Reaktionsprodukten nicht möglich ist.

Um die Wärmerekuperation zu begünstigen, sowie zur Deckung des Wärmebedarfs der endothermen Reaktionen erlaubt die erfindungsgemässe Vorrichtung, wie gesagt, zusätzliche Wärme zuzuführen. Dies geschieht zwischen dem Aufwärmen der Ausgangsstoffe und Abkühlen der Reaktionsprodukte, an dieser Stelle wird dem Prozessgas zusätzliche Wärme mittels elektrischer Heizung zugeführt.

Die Vorrichtung soll die Reaktionsprodukte bei hohem Druck liefern, um die Energie für deren allfällig notwendige weitere Kompression zu sparen. Daraus folgt die Notwendigkeit von einer hohen Endtemperatur der chemischen Reaktionen, damit diese weitgehend genug verlaufen. Diejenigen Anlageteile, welche hohen Temperaturen ausgesetzt sind, können aber keine hohen Spannungen ertragen.

Die Vorrichtung und das Verfahren werden nun anhand eines mittels der Figur 1 veranschaulichten Beispiels beschrieben. Ein Gasgemisch besteht aus 1 Mol Oktan ($C_8H_{18}$) und 32 Molen Wasserdampf ($H_2O$). Es wird bei einem Druck von 100 bar und einer Temperatur von 600 K durch die Leitung 1 stetig in das Druckgehäuse 2 gespiesen. Der untere Teil dieses Gehäuses ist innen mittels eines wärmeisolierenden Stoffes 3 ausgekleidet.

Das angelieferte Gas fliesst durch den Rohrboden 4 in eine Anzahl parallelgeschalteter Rohre 5. Der obere Teil des letzteren ist leer. Darin wird das Gas auf eine Temperatur von 800 K aufgewärmt. Der darunterliegende Teil der Rohre 5 ist mit einem bekannten Katalysator 6 gefüllt. Hier wird das Gaz zunächst auf eine Temperatur von 1100 K mittels Wärmrekuperation und weiter auf eine Temperatur von 1500 K mittels elektrischer Heizung aufgewärmt, wobei gleichzeitig die nachstehende chemische Sammel-Reaktion stattfindet:

$$C_8H_{18}+32\ H_2O \longrightarrow 0{,}03\ CH_4+5{,}56\ CO+ 2{,}41\ CO_2+21{,}62\ H_2O+19{,}32\ H_2$$

Im untersten Teil der Rohre 5 wird Wärme mittels der elektrischen Heizstäbe 7 zugeführt, und zwar etwa 1,5 MJ Mol $C_8H_{18}$. Die übrige Wärmezufuhr erfolgt, wie erwähnt, durch Rekuperation der fühlbaren Wärme des nun abzukühlenden Gasgemisches, das durch die Oeffnung 8 aus dem Innenraum der Rohre 5 in deren Aussenraum 9 gelangt und, nach oben fliessend, sich auf eine Temperatur von 700 K abkühlt, um schliesslich das Druckgehäuse durch die Leitung 10 zu verlassen.

Die für den Wärmeübergang zur Verfügung stehende Temperaturdifferenz beträgt in diesem Beispiel 400 K am heissen und 100 K am kalten Ende des Rekuperators. Diese Differenz ist somit hoch genug, um die Wärme intensiv zu übertragen. Am heissen Ende können die Rohre nötigenfalls aus keramischen Werkstoffen hergestellt werden.

Nach der vorhin aufgeführten Brutto-Reaktionsformel werden 19,32 Mol $H_2$ aus 1 Mol $C_8H_{18}$ erzeugt. Weitere 5,56 Mole $H_2$ werden mittels der bekannten Umwandlung der erhaltenen Menge CO erzeugt. Daraus lassen sich 0,28 kg von Ammoniak mittels bekannter Verfahrensschritte synthetisieren, wobei kein wesentlicher Zusatzbedarf an von aussen zuzuführender Energie notwendig ist. Der untere Heizwert von Oktan beträgt 5,1 MJ Mol, folglich werden 18 MJ davon pro 1 kg Ammoniak benötigt. Dazu kommen die erwähnten 1,5 MJ Mol $C_8H_{18}$ bzw. 5,4 MJ/kg $NH_3$ an elektrischer Energie. Der Gesamtbedarf an Energie möge etwas höher als die Summe der beiden oben aufgeführten Zahlen sein und etwa 25 MJ/kg $NH_3$ betragen. Das ist immerhin nur 70 % des Durchschnittsbedarfs von 35 MJ/kg $NH_3$ in den bekannten Verfahren. Diese Einsparung wird nicht wesentlich verschieden, wenn andere Kohlenwasserstoffe statt Oktan als Grundstoff verwendet werden.

Die übrigen Verfahrensschritte der Ammoniak- bzw. der Methanolerzeugung sind hinreichend bekannt und brauchen hier nicht beschrieben zu werden.

**Patentansprüche**

1. Verfahren zur Herstellung von Wasserstoff unter Druck, mittels chemischen Reaktionen zwischen Kohlenwasserstoffen und Wasserdampf und unter verringertem Kohlenwasserstoff- und Energiebedarf, dadurch gekennzeichnet, dass das Ausgangs-Gasgemisch mittels Wärmerekuperation im Austausch mit dem Reaktionsprodukten auf etwa 1100 K und dann erst mittels elektrisch erzeugter Wärme auf die obere Reaktionstemperatur von etwa 1500 K gebracht wird.

2. Verfahren gemäss Patentanspruch 1, dadurch gekennzeichnet, dass die elektrisch erzeugte Wärme teilweise durch Wärme, die mittels Verbrennen von Reduktionsmitteln mit Sauerstoff oder Sauerstoff enthaltenden Gasen erhalten wird, ersetzt wird.

3. Vorrichtung zur Ausführung des Verfahrens gemäss Patentanspruch 1, dadurch gekennzeichnet, dass Wärmerekuperator (5), Katalysatorbehälter (6) und elektrische Heizeinrichtung (7) in einem gemeinsamen Druckgehäuse (2) untergebracht sind, das innen teilweise isoliert ist und aussen auf geeignete Weise gekühlt wird.

**Revendications**

1. Procédé pour la production d'hydrogène sous pression au moyen de réactions entre des hydrocarbures et de la vapeur d'eau avec

**besoins réduits en hydrocarbures et énergie,** caractérisé en ce que la composition initiale des gaz est chauffée à environ 1100 K par récupération de chaleur en échange avec les gaz obtenus dans la réaction et, après seulement, à la température supérieure de réaction d'environ 1500 K par de la chaleur électrique.

2. Procédé selon la revendication 1, caractérisé en ce que ladite chaleur électrique est partiellement remplacée par de la chaleur obtenue dans la combustion de carburants avec de l'oxygène ou de mélanges gazeux contenants de l'oxygène.

3. Appareil pour la mise en oeuvre du procédé selon la revendication 1, caractérisé en ce que le récupérateur de chaleur (5), les récipients du catalyseur (6) et les organes de chauffage électrique (7) sont rassemblés dans un récipient de pression commun (2) lequel récipient est isolé thermiquement à l'intérieur et est refroidi par des méthodes appropriées à l'exterieur.

## Claims

1. Process for the preparation of hydrogen under pressure by means of chemical reactions between hydrocarbons and water vapor with reduced requirements of hydrocarbons and energy, caracterized in that the initial gas mixture is heated by heat recovery in exchange with the reaction products to about 1100 K and then only, by means of electrically produced heat, to the upper reaction temperature of about 1500 K.

2. The process of claim 1, characterized in that the electrically produced heat is partially replaced by reaction heat from the burning of fuels with oxygen or oxygen containing gases.

3. Apparatus for implementing the process of claim 1, characterized in that the heat recuperator (5), the containers of catalyst (6) and the electrical heating devices (7) are enclosed in one common pressure vessel (2), which vessel is thermally isolated inside and cooled in an appropriate way outside.

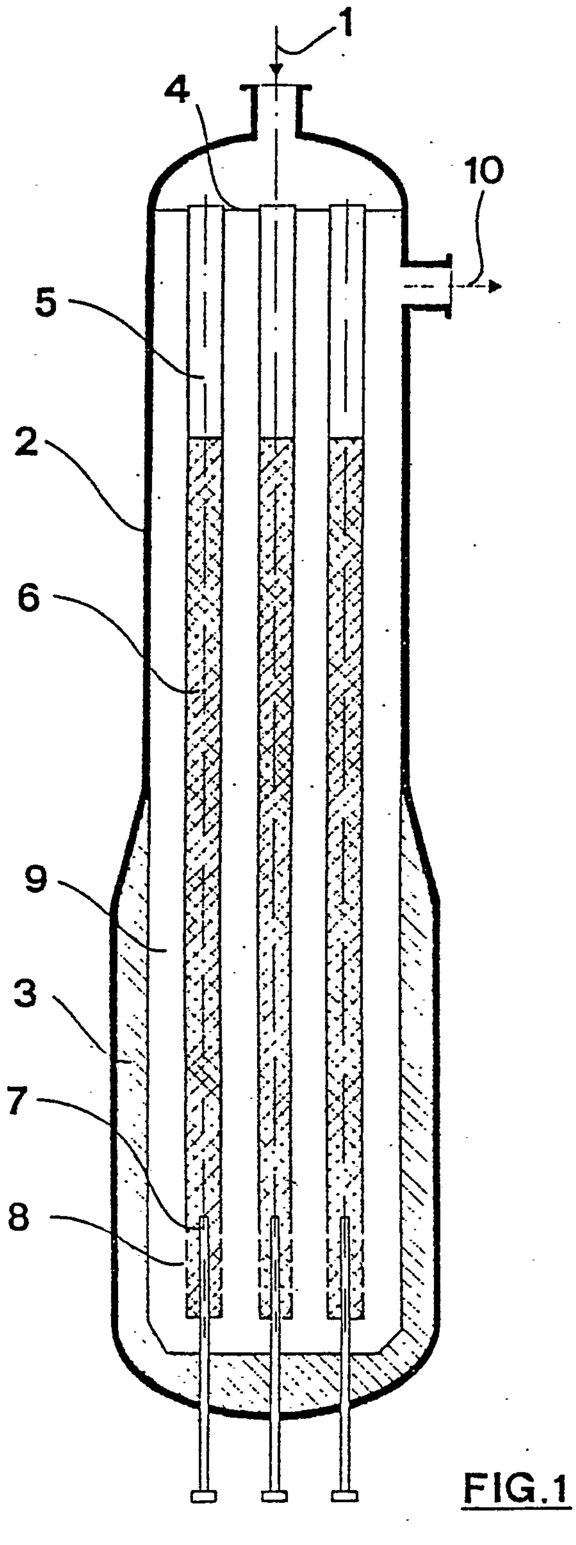


FIG.1